# EUROPEAN PATENT APPLICATION

(11) **EP 4 704 160 A1**
(43) Date of publication of application: **04.03.2026**
(21) Application number: 25195201.6
(22) Date of filing: 11.08.2025
(51) Int. Cl.: H01M 4/02, H01M 10/05, H01M 10/052, H01M 10/0525, H01M 10/058

(54) **ELECTRODE ASSEMBLY AND BATTERY CELL INCLUDING THE SAME**

(30) Priority: 28.08.2024 KR 20240116280
(71) Applicant: SAMSUNG SDI CO., LTD., Yongin-si, Gyeonggi-do 17084 (KR)
(72) Inventor: PARK, Mingyu, Yongin-si, Gyeonggi-do 17084 (KR)
(74) Representative: Marks & Clerk LLP

(57) **Abstract**

An electrode assembly includes a first electrode plate including a first substrate and a first composite portion on the first substrate, a second electrode plate including a second substrate, a second composite portion on the second substrate, and a lithium coating layer on the second substrate, and a separator between the first electrode plate and the second electrode plate.

## Description

### BACKGROUND

### 1. Field

Aspects of embodiments of the present disclosure relate to an electrode assembly including a lithium coating layer and a secondary battery including the electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Lithium secondary batteries may include an electrode assembly containing lithium and an electrolyte. The lithium secondary batteries can be charged or discharged as lithium ions move through the electrolyte. Side reactions that may occur within the secondary batteries may result in a decrease in the number of mobile lithium ions. That is, as the secondary batteries are used, the number of mobile lithium ions decreases, which reduces the electric capacity and shortens the lifespan of the secondary batteries.

The above information disclosed in this Background section is for enhancement of understanding of the background of the present disclosure, and therefore, it may
contain information that does not constitute related (or prior) art.

### SUMMARY

Aspects of embodiments provide an electrode assembly, including a first electrode plate having a first substrate and a first composite portion disposed on the first substrate, a second electrode plate having a second substrate and a second composite portion disposed on the second substrate, and a separator interposed between the first electrode plate and the second electrode plate, and the second electrode plate includes a lithium coating layer disposed on the second substrate.

In an embodiment of the present disclosure, the second electrode plate may include a cover layer disposed on a surface of the lithium coating layer.

In an embodiment of the present disclosure, the cover layer may contain Li₂O.

In an embodiment of the present disclosure, as the thickness of the cover layer increases, lithium ions supplied from the lithium coating layer may diffuse more slowly.

In an embodiment of the present disclosure, the thickness of the cover layer may be approximately 100 to 500 nm.

In an embodiment of the present disclosure, the thickness of the cover layer may be approximately 1/30 to 1/6 of the thickness of the lithium coating layer.

In an embodiment of the present disclosure, the thickness of the lithium coating layer may be approximately 2 to 5 µm.

In an embodiment of the present disclosure, the lithium coating layer may provide lithium ions to at least one of the first composite portion and the second composite portion.

Aspects of embodiments also provide a battery cell, including an electrode assembly having a first electrode plate including a first substrate and a first composite portion disposed on the first substrate, a second electrode plate having a second substrate and a second composite portion disposed on the second substrate, and a separator interposed between the first electrode plate and the second electrode plate, an electrolyte, and a case accommodating the electrode assembly and the electrolyte, and the second electrode plate includes a lithium coating layer disposed on the second substrate.

In an embodiment of the present disclosure, the second electrode plate may include a cover layer disposed on a surface of the lithium coating layer.

In an embodiment of the present disclosure, the cover layer may contain Li₂O.

In an embodiment of the present disclosure, lithium contained in the lithium coating layer may be ionized to provide lithium ions to the electrolyte.

In an embodiment of the present disclosure, the electrode assembly may be a stacked electrode assembly including a plurality of unit stacks including a portion of the first electrode plate, a portion of the separator, and a portion of the second electrode plate.

In an embodiment of the present disclosure, the electrode assembly may include one or more lithium unit stacks including a portion of the first electrode plate, a portion of the separator, and a portion of the second electrode plate, and the lithium coating layer may be disposed only on the second substrate included in the lithium unit stack among the second substrates in the plurality of unit stacks and the second substrate in the lithium unit stack.

In an embodiment of the present disclosure, only the lithium coating layer may be placed on at least one side of the second substrate included in the lithium unit stack.

In an embodiment of the present disclosure, the ratio of the number of the unit stacks to the number of the lithium unit stacks may be approximately 35:1 to 80:1.

Aspects of embodiments also provide a method of manufacturing an electrode assembly, including preparing a first electrode plate having a first substrate and a first composite portion placed on the first substrate, preparing a second electrode plate including a second substrate, a second composite portion placed on the second substrate, and a lithium coating layer, and placing a separator between the first electrode plate and the second electrode plate.

In an embodiment of the present disclosure, the second electrode plate may include a cover layer disposed on the surface of the lithium coating layer, and the cover layer may contain Li₂O.

In an embodiment of the present disclosure, the preparing of the second electrode plate may include forming the cover layer by exposing the lithium coating layer to oxygen.

In an embodiment of the present disclosure, the preparing of the second electrode plate may include forming the cover layer by exposing a separate lithium layer to oxygen and placing the cover layer on the second substrate.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a battery cell according to an embodiment of the present disclosure.
FIG. 2 illustrates a negative electrode plate according to an embodiment of the present disclosure.
FIG. 3 illustrates a negative electrode plate according to an embodiment of the present disclosure.
FIG. 4 illustrates a negative electrode plate according to an embodiment of the present disclosure.
FIG. 5 illustrates formation of a cover layer according to an embodiment of the present disclosure.
FIG. 6 illustrates formation of a cover layer according to another embodiment of the present disclosure.
FIG. 7 illustrates an electrode assembly according to an embodiment of the present disclosure.
FIG. 8 illustrates an electrode assembly according to an embodiment of the present disclosure.
FIG. 9 illustrates an electrode assembly according to an embodiment of the present disclosure.
FIG. 10 illustrates a flowchart of a method of manufacturing an electrode assembly according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

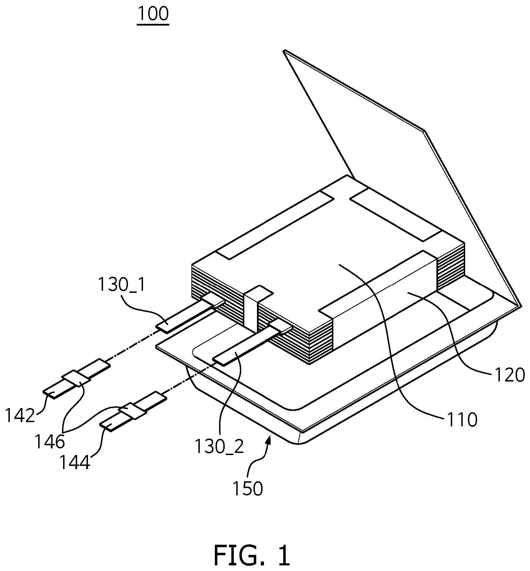

FIG. 1 illustrates a perspective view of a battery cell 100 according to an embodiment of the present disclosure. Referring to FIG. 1, the battery cell 100 may include a case 150 and an electrode assembly 110 disposed inside the case 150.

The electrode assembly 110 may include a first electrode plate, a second electrode plate, and a separator. For example, the electrode assembly 110 may be a stacked type where the first and second electrode plates made of a plurality of sheets are alternately laminated with the separator, which is an insulator, interposed therebetween. In another example, the electrode assembly 110 may be a winding type where the first electrode plate and the second electrode plate are wound with the separator interposed therebetween. In yet another example, the electrode assembly may be a Z-stack electrode assembly 110 where the first electrode plate and the second electrode plate are inserted on both sides of the separator folded in a Z-stack.

One or more electrode assemblies 110 may be stacked for their long side surfaces to be adjacent to each other and accommodated inside the case 150, and the number of the electrode assemblies 110 may vary. The first electrode plate of the electrode assembly 110 may serve as an anode, and the second electrode plate thereof may serve as a cathode, e.g., the opposite may also be true.

The first electrode plate may include a first composite portion disposed on at least a portion of a first substrate. A first substrate tab 130_1 may extend outwardly from a first blank portion where the first composite portion is not disposed on the first substrate, and the first substrate tab 130_1 may be electrically connected to the case 150, e.g., a first terminal disposed in the case 150. In some embodiments, the first substrate tab 130_1 may be severed in advance so that it protrudes to the other side during the manufacture of the first electrode plate, and may protrude further from the separator to the other side without a separate severing.

The second electrode plate may include a second composite portion disposed on at least a portion of a second substrate. A second substrate tab 130_2 may extend outwardly from a second blank portion where the second composite portion is not disposed on the second substrate, and the second substrate tab 130_2 may be electrically connected to the case 150, e.g., a second terminal disposed in the case 150. In some embodiments, the second substrate tab 130_2 may be severed in advance so that it protrudes to one side during the manufacture of the second electrode plate, and may protrude further from the separator to one side without a separate severing.

In an embodiment of the present disclosure, the second electrode plate may include a lithium coating layer disposed on at least a portion of the second substrate. The lithium coating layer may contain lithium and supply lithium ions to the electrode assembly 110 and an electrolyte accommodated in the case 150. In addition, the second electrode plate may include a cover layer disposed on a surface of the lithium coating layer, and the cover layer may contain Li₂O.

The first electrode plate may serve as an anode. In this case, the first substrate may be made of, e.g., aluminum foil, and the first composite portion may include, e.g., a transition metal oxide. The second electrode plate may serve as a cathode. In this case, the second substrate may be made of, e.g., copper foil or nickel foil, and the second composite portion may include, e.g., graphite.

For example, the first composite portion may include a positive active material. As the positive active material, a compound capable of reversible intercalation and deintercalation of lithium, such as a lithiated intercalation compound, may be used. For example, at least one of compound oxides of lithium and a metal selected from cobalt, manganese, nickel, and combinations thereof may be used. The compound oxide may be a lithium transition metal compound oxide, e.g., lithium nickel oxides, lithium cobalt oxides, lithium manganese oxides, lithium iron phosphate compounds, cobalt-free nickel-manganese oxides, or combinations thereof.

**In** addition, the second composite portion may include a negative active material. The negative active material may include a material capable of reversibly intercalating or deintercalating lithium ions, lithium metal, an alloy of lithium metal, a substance capable of being doped and dedoped with lithium, or a transition metal oxide.

Examples of a material capable of reversibly intercalating or deintercalating lithium ions may include a carbon negative active material, such as crystalline carbon, amorphous carbon, or a combination thereof. Examples of the crystalline carbon may include graphite such as natural graphite or artificial graphite, which may be amorphous, plate-shaped, flake-shaped, spherical, or fibrous. Examples of the amorphous carbon may include soft or hard carbon, mesophase pitch carbide, calcined coke, etc.

The separator may serve to prevent short circuiting between the first electrode plate and the second electrode plate while allowing lithium ions to move. For example, the separator may be composed of a polyethylene film, a polypropylene film, a polyethylene-polypropylene film, etc.

The first substrate tab 130_1 may serve as a passage through which current flows between the first electrode plate and a first lead tab 142. A tab film 146 for insulation from the case 150 may be attached to the first lead tab 142. The second substrate tab 130_2 may serve as a passage through which current flows between the second electrode plate and a second lead tab 144. The tab film 146 for insulation from the case 150 may be attached to the second lead tab 144.

In an embodiment, a protective tape 120 may be attached to a surface of the electrode assembly 110. The protective tape 120 may be attached along the perimeter of side surfaces of the electrode assembly 110. The protective tape 120 may align the electrode assembly 110 and protect it from external impact.

The case 150 may form the overall appearance of the battery cell 100 and provide a space in which the electrode assembly 110 is accommodated. The case 150 may be made of a metal such as steel use stainless (SUS), aluminum, aluminum alloy, and nickel-plated steel or a laminate film, plastic, etc. forming a pouch.

In an embodiment, the battery cell 100 may include an electrolyte accommodated together with the electrode assembly 110 in the case 150. Here, the first electrode plate, the second electrode plate, and the separator, included in the electrode assembly 110, may be impregnated with the electrolyte. The electrolyte may include a non-aqueous organic solvent and a lithium salt. The non-aqueous organic solvent may serve as a medium through which ions involved in the electrochemical reaction of a battery can move. The non-aqueous organic solvent may be a carbonate, ester, ether, ketone, or alcohol solvent, an aprotic solvent, or a combination thereof.

In FIG. 1, the case 150 is illustrated as a pouch-shaped case, and the battery cell 100 is illustrated as a pouch-shaped battery. However, the battery cell 100 may be a battery cell in any shape such as a square shape, a cylindrical shape, or a pouch shape.

The battery cell 100 may be a type of secondary battery. For example, the battery cell 100 may be a lithium battery cell, a sodium battery cell, etc. However, examples of the battery cell 100 may include all cells that can repeatedly provide electricity by charging and discharging. The battery cell 100 according to an embodiment of the present disclosure may be applied to, e.g., automobiles, mobile phones, and/or various types of electrical devices.

Lithium or lithium ions included in the electrode assembly 110 may be fixed by various side reactions inside the battery cell 100. For example, as the battery cell 100 is charged or discharged, the lithium ions may form a solid electrolyte interphase (SEI) layer and may not be supplied to the electrolyte. As a result, when a battery cell includes an electrode assembly not containing a lithium coating layer, lithium in a first electrode plate and/or a second electrode plate may be consumed as the battery cell is continuously used. Such battery cells may deteriorate, reducing their output and electric capacity. According to an embodiment of the present disclosure, lithium ions may be supplied from the lithium coating layer, so that, even when continuously used, the battery cell 100 may not deteriorate, maintaining the output and the electric capacity.

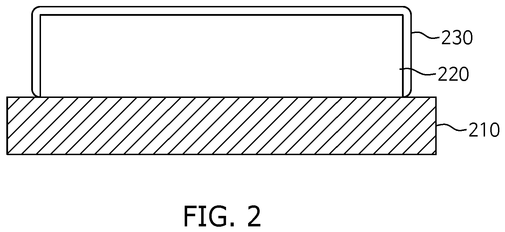

FIG. 2 illustrates a negative electrode plate according to an embodiment of the present disclosure. FIG. 2 shows a portion of the negative electrode plate, such as the second electrode plate described with reference to FIG. 1.

Referring to FIG. 2, the negative electrode plate may include a negative electrode substrate 210, such as the second substrate described with reference to FIG. 1, and a negative electrode composite portion 220, such as the second composite portion described with reference to FIG. 1, disposed on the negative electrode substrate 210. As the battery cell 100 including the negative electrode plate is charged or discharged, an SEI layer 230 may be formed on a surface of the negative electrode composite portion 220. The SEI layer 230 may not be formed when the negative electrode plate is manufactured, but when the battery cell 100 including the negative electrode plate is charged or discharged. The SEI layer 230 may be formed due to a side reaction of a material in the electrolyte and/or a material in the negative electrode composite portion 220. For example, the SEI layer 230 may be formed by reduction of lithium ions. For example, the thickness of the SEI layer 230 may be approximately 10 nm to 50 nm.

In addition, when a lithium-ion source such as lithium metal is added due to repeated charging and discharging of the battery cell, insufficient lithium source of the battery cell, etc., the volume of the negative electrode composite portion 220 may repeatedly expand or contract. Cracks may occur in the negative electrode composite portion 220, and dendrites may develop. As the surface area of the negative electrode composite portion 220 increases, the SEI layer 230 may become wider.

While the battery cell 100 is being charged or discharged, energy may be stored and released as lithium ions move between a positive electrode plate, such as the first electrode plate described with reference to FIG. 1, and the negative electrode plate. Specifically, lithium ions may be inserted in and/or released from a positive electrode composite portion, such as the first composite portion described with reference to FIG. 1, and the negative electrode composite portion 220. Here, when lithium or lithium ions are not additionally supplied, lithium or lithium ions contained in the positive electrode plate, the electrolyte, and/or the negative electrode plate may be consumed due to the formation of the SEI layer 230, etc.

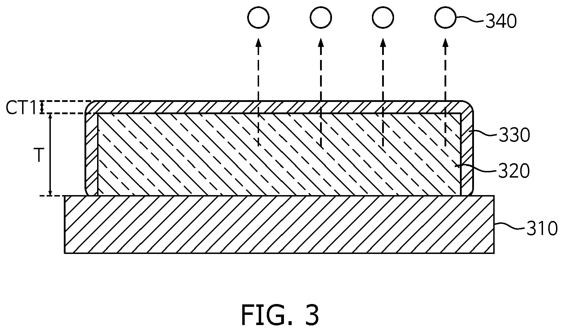

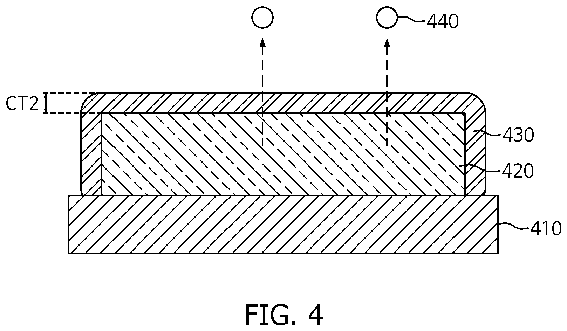

FIG. 3 illustrates a negative electrode plate according to an embodiment of the present disclosure. FIG. 4 illustrates a negative electrode plate according to an embodiment of the present disclosure.

Referring to FIG. 3, a negative electrode plate may include a lithium coating layer 320 disposed on a negative electrode substrate 310. The negative electrode plate may include a cover layer 330 disposed on a surface of the lithium coating layer 320.

The lithium coating layer 320 may contain high-purity lithium. For example, the lithium coating layer 320 may have a higher lithium content than a positive electrode composite portion. For example, the lithium content of the lithium coating layer 320 may be approximately 95% or more, e.g., approximately 99% or more or approximately 99.9% or more, based on a total weight of the lithium coating layer 320.

In an embodiment, a negative electrode plate within a battery cell such as the battery cell 100 in FIG. 1 may be exposed to an electrolyte. Lithium in the lithium coating layer 320 may be dissolved in an electrolyte, so that lithium ions 340 may be supplied to the electrolyte. Thereafter, the lithium ions 340 may be supplied to at least one of a positive electrode composite portion and a negative electrode composite portion. For example, as an SEI layer such as the SEI layer 230 in FIG. 2 is formed, the lithium ions 340 moving between the positive electrode composite portion and the negative electrode composite portion may be reduced. In this case, the lithium ions 340 supplied by the lithium coating layer 320 may be supplied to at least one of the positive electrode composite portion and the negative electrode composite portion, thereby replenishing the lithium ions 340.

In an embodiment, the cover layer 330 may include Li₂O. For example, the cover layer 330 may have a higher Li₂O content than the SEI layer. The lithium-ion conductivity of Li₂O may be approximately 10⁻¹⁰ to 10⁻⁷ S cm⁻¹, which means that the lithium-ion conductivity thereof is relatively high compared to other ions. As a result, even when the cover layer 330 is disposed on a surface of the lithium coating layer 320, the lithium ions 340 may be supplied from the lithium coating layer 320.

In an embodiment, the thickness T of the lithium coating layer 320 may be approximately 2 µm to 5 µm. Here, the thickness CT1 of the cover layer 330 may be approximately 100 nm to 500 nm. For example, the thickness CT1 of the cover layer 330 may be approximately 1/30 to 1/6 of the thickness T of the lithium coating layer 320.

Referring to FIG. 4, the negative electrode plate may include a lithium coating layer 420 disposed on a negative electrode substrate 410 and a cover layer 430 disposed on a surface of the lithium coating layer 420. The negative electrode plate in FIG. 4 may be identical to that in FIG. 3, except for the thickness of the cover layer 430.

The thickness CT2 of the cover layer 430 in FIG. 4 may be greater than the thickness CT1 of the cover layer 330 in FIG. 3. Lithium ions 440 supplied by the lithium coating layer 420 may penetrate the cover layer 430 and diffuse into an electrolyte, etc. Here, as the thickness CT2 of the cover layer 430 increases, the lithium ions 440 supplied from the lithium coating layer 420 may diffuse more slowly.

As described above, it may be possible to control the speed at which the lithium ions 440 supplied from the lithium coating layer 420 diffuse by controlling the thickness of the cover layer 430. It may be possible to adjust the thickness of the cover layer 430 based on the specifications, lifespan, etc. of a battery cell, thereby preventing oversupply and/or undersupply of the lithium ions 440.

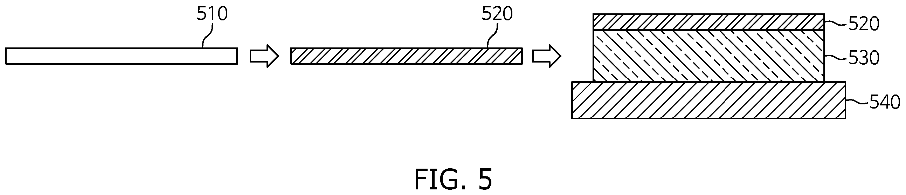

FIG. 5 illustrates formation of a cover layer 520 according to an embodiment of the present disclosure.

Referring to FIG. 5, a lithium layer 510 including high-purity lithium may be prepared. For example, the lithium content of the lithium layer 510 may be approximately 95% or more, e.g., approximately 99% or more or approximately 99.9% or more.

As the lithium layer 510 is exposed to oxygen such as high concentration of oxygen gas, the cover layer 520 containing Li₂O may be formed, e.g., the entirety of the lithium layer 510 may interact with the oxygen gas to transform into the cover layer 520. Thereafter, the cover layer 520 may be placed on a negative electrode composite portion 530 placed on a negative electrode substrate 540. For example, referring to FIG. 5, the cover layer 520 may be placed on the opposite side of one side of the negative electrode composite portion 530 facing the negative electrode substrate 540, e.g., the cover layer 520 and the negative electrode substrate 540 may be on opposite surfaces of the negative electrode composite portion 530. In another example, the cover layer 520 may be placed on a side surface of the negative electrode composite portion 530.

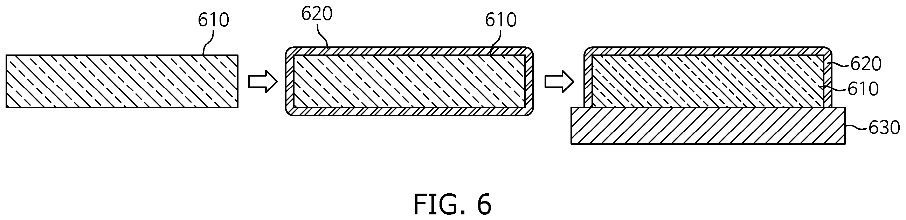

FIG. 6 illustrates formation of a cover layer 620 according to another embodiment of the present disclosure.

Referring to FIG. 6, a lithium coating layer 610 containing lithium may be prepared. The lithium coating layer 610 may have yet to be disposed on a negative electrode substrate 630.

In an embodiment, as the lithium coating layer 610 is exposed to oxygen, the cover layer 620 containing Li₂O may be formed on a surface of the lithium coating layer 610. For example, a portion of the lithium coating layer 610 around its own surface may become the cover layer 620, e.g., an edge of the lithium coating layer 610 to a predetermined depth on an entire outer surface of the lithium coating layer 610 may interact with oxygen to transform into the cover layer 620 coating the lithium coating layer 610. In this case, the cover layer 620 may cover the entire surface of the lithium coating layer 610. Thereafter, the lithium coating layer 610 on which the cover layer 620 is formed may be placed on the negative electrode substrate 630.

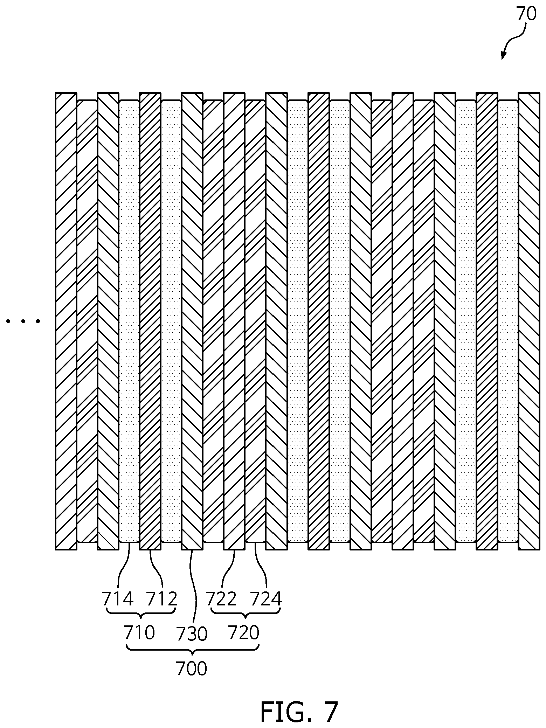

FIG. 7 illustrates an electrode assembly 70 according to an embodiment of the present disclosure.

For example, referring to FIG. 7, the electrode assembly 70 may have a stacked structure including a plurality of unit stacks 700. In another example, the electrode assembly 70 may have a winding structure. With reference to FIGS. 7 to 9, the electrode assembly 70 having the stacked structure will be described.

The electrode assembly 70 may include the plurality of unit stacks 700 including a portion of a first electrode plate 710, a portion of a second electrode plate 720, and a portion of a separator 730. The first electrode plate 710 may be a positive electrode plate, and the second electrode plate 720 may be a negative electrode plate, or vice versa.

The first electrode plate 710 may include a first substrate 712 and a first composite portion 714 disposed on the first substrate 712. The second electrode plate 720 may include a second substrate 722 and a second composite portion 724 disposed on the second substrate 722. For example, the second electrode plate 720 may include a lithium coating layer disposed on the second substrate 722.

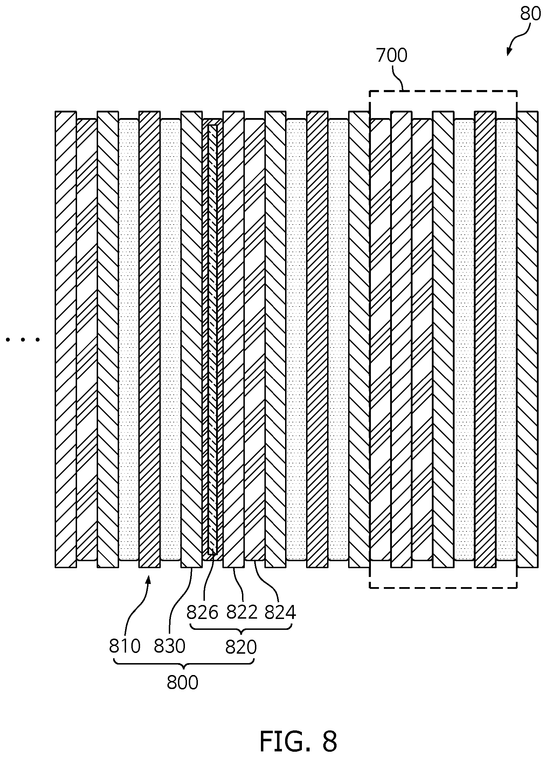

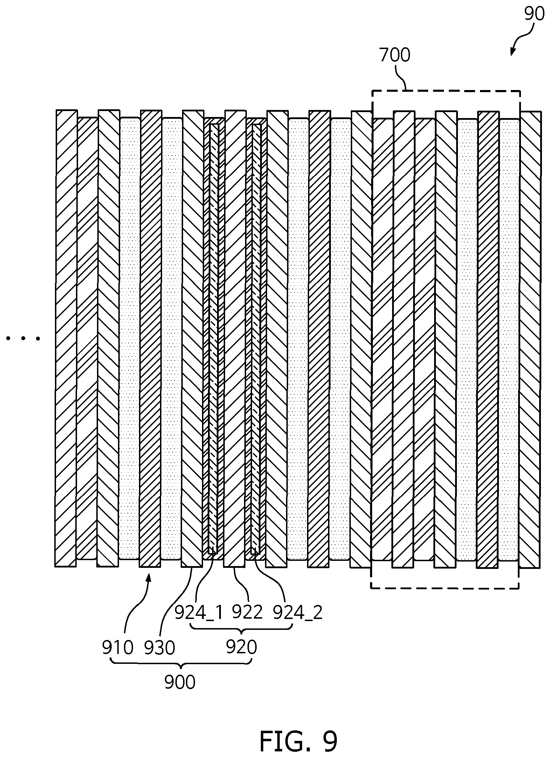

In another example, referring to FIG. 7, the unit stack 700 may include only the second composite portion 724, e.g., the unit stack 700 may include a portion of the second composite portion 724 and the second substrate 722 facing the portion of the second composite portion 724 without a lithium coating layer. FIG. 7 illustrates the electrode assembly 70 including only the plurality of unit stacks 700, but the electrode assembly 70 may include a lithium unit stack including a lithium coating layer. The lithium unit stack will be described in detail with reference to FIGS. 8 and 9.

FIG. 8 illustrates an electrode assembly 80 according to an embodiment of the present disclosure. The electrode assembly 80 may include the unit stack 700 and a lithium unit stack 800. The lithium unit stack 800 may include a portion of a first electrode plate 810, a portion of a second electrode plate 820, and a portion of a separator 830. In addition, the lithium unit stack 800 may include a second composite portion 824 disposed on a second substrate and a lithium coating layer 826.

In an embodiment, the lithium coating layer 826 may be disposed only on a second substrate 822 included in the lithium unit stack 800 among the second substrates in the plurality of unit stacks 700 and the second substrate 822 in the lithium unit stack 800. That is, the lithium coating layer 826 may not be placed on the second substrates included in each of the plurality of unit stacks 700.

In an embodiment, the electrode assembly 80 may be impregnated with an electrolyte. Lithium included in the lithium coating layer 826 may be ionized to provide lithium ions to the electrolyte. The lithium ions provided in this manner may be supplied to a first composite portion, the second composite portion 824, etc.

In an embodiment, the electrode assembly 80 may include the plurality of unit stacks 700 and one or more lithium unit stacks 800. For example, the ratio of the number of the unit stacks 700 to the number of the lithium unit stacks 800 may be approximately 35:1 to 80:1. However, the ratio of the number of the unit stacks 700 to the number of the lithium unit stacks 800 may be different from the above-mentioned ratio so as to control the supply amount of lithium ions.

In an embodiment, the electrode assembly 80 may include a plurality of lithium unit stacks 800. The plurality of lithium unit stacks 800 may be arranged sequentially between the plurality of unit stacks 700. In another embodiment, one or more unit stacks 700 may be disposed between the plurality of lithium unit stacks 800.

Referring to FIG. 8, the second composite portion 824 may be placed on one side of the second substrate 822, and the lithium coating layer 826 may be placed on the other side of the second substrate 822. Here, the above-mentioned one side of the second substrate 822 may face the above-mentioned other side thereof.

FIG. 9 illustrates an electrode assembly 90 according to an embodiment of the present disclosure. The electrode assembly 90 may include the unit stack 700 and a lithium unit stack 900. The lithium unit stack 900 may include a portion of a first electrode plate 910, a portion of a second electrode plate 920, and a portion of a separator 930. In addition, the lithium unit stack 900 may include a first lithium coating layer 924_1 and a second lithium coating layer 924_2, disposed on a second substrate 922.

In an embodiment, a lithium coating layer may be disposed only on the second substrate 922 included in the lithium unit stack 900 among the second substrates in the plurality of unit stacks 700 and the second substrate 922 in the lithium unit stack 900. That is, the lithium coating layer may not be placed on the second substrates included in each of the plurality of unit stacks 700.

For example, the lithium unit stack 900 may include the first lithium coating layer 924_1 disposed on one side of the second substrate 922 and the second lithium coating layer 924_2 disposed on the other side of the second substrate 922. Here, the aforementioned one side of the second substrate 922 may face the aforementioned other side of the second substrate 922. That is, the lithium unit stack 900 may not include a second composite portion.

In an embodiment, the electrode assembly 90 may be impregnated with an electrolyte. Lithium included in the first and second lithium coating layers 924_1 and 924_2 may be ionized to provide lithium ions to the electrolyte. The lithium ions provided in this manner may be supplied to a first composite portion, a second composite portion, etc.

As described above, it may be possible to control the amount of lithium ions supplied to an electrolyte, etc. by arranging a lithium coating layer on at least one side of a second substrate of a lithium unit stack or controlling the ratio of the number of unit stacks to the number of lithium unit stacks.

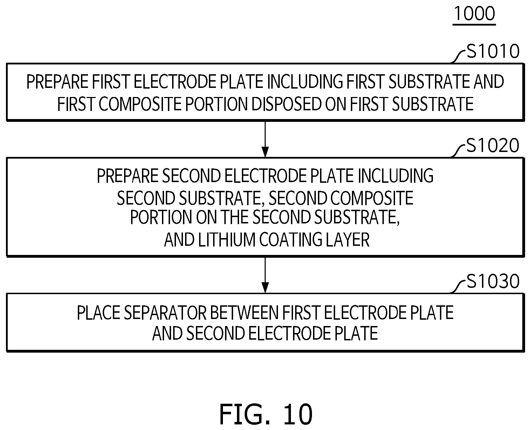

FIG. 10 is a flowchart for illustrating a method 1000 of manufacturing an electrode assembly according to an embodiment of the present disclosure.

The method 1000 of manufacturing an electrode assembly may be performed by a device for manufacturing an electrode assembly. Referring to FIG. 10, the method 1000 of manufacturing an electrode assembly may be initiated by preparing a first electrode plate including a first substrate and a first composite portion disposed on the first substrate at S1010.

The device for manufacturing an electrode assembly may prepare a second electrode plate including a second substrate, a second composite portion disposed on the second substrate, and a lithium coating layer at S1020. The second electrode plate may include a cover layer disposed on a surface of the lithium coating layer. The cover layer may include Li₂O.

**In** an embodiment, the lithium coating layer may provide lithium ions to at least one of the first composite portion and the second composite portion. Specifically, as the thickness of the cover layer increases, the lithium ions supplied from the lithium coating layer may diffuse more slowly. For example, the thickness of the cover layer may be approximately 100 nm to 500 nm. For example, the thickness of the cover layer may be approximately 1/30 to 1/6 of the thickness of the lithium coating layer. For example, the thickness of the lithium coating layer may be approximately 2 µm to 5 µm.

In an embodiment, the device for manufacturing an electrode assembly may form the cover layer by exposing the lithium coating layer to oxygen. In another embodiment, the device for manufacturing an electrode assembly may form the cover layer by exposing a separate lithium layer to oxygen. Thereafter, the device for manufacturing an electrode assembly may place the cover layer on the second substrate.

The device for manufacturing an electrode assembly may place a separator between the first electrode plate and the second electrode plate at S1030.

In an embodiment, a battery cell may be provided including an electrode assembly, an electrolyte, and a case accommodating the electrode assembly and the electrolyte. Lithium contained in a lithium coating layer in the electrode assembly may be ionized to provide lithium ions to the electrolyte.

In an embodiment, the electrode assembly may be a stacked electrode assembly including a plurality of unit stacks including a portion of a first electrode plate, a portion of a separator, and a portion of a second electrode plate. In addition, the electrode assembly may include one or more lithium unit stacks including a portion of a first electrode plate, a portion of a separator, and a portion of a second electrode plate, and the lithium coating layer may be disposed only on the second substrate included in the lithium unit stack among the second substrates in the plurality of unit stacks and the second substrate in the lithium unit stack. Only the lithium coating layer may be placed on at least one side of the second substrate included in the lithium unit stack. For example, the ratio of the number of the unit stacks to the number of the lithium unit stacks may be approximately 35:1 to 80:1.

The flowchart in FIG. 10 and the description above are only in accordance with an embodiment of the present disclosure, and the scope of the present disclosure is not limited thereto. For example, one or more stages in the flowchart and the description may be added/changed/deleted, the order of one or more steps may be changed, and one or more steps may be performed simultaneously.

By way of summation and review, side reactions that may occur within lithium secondary batteries may result in a decrease in the number of mobile lithium ions. That is, as the lithium secondary batteries are used, the number of mobile lithium ions decreases, which reduces the electric capacity and shortens the lifespan of the lithium secondary batteries.

In contrast, the present disclosure provides an electrode assembly and a secondary battery including the electrode assembly where lithium ions may be supplied from a lithium coating layer, so that, even when continuously used, a battery cell may not deteriorate, maintaining the output and the electric capacity.

According to some embodiments of the present disclosure, it may be possible to control the speed at which lithium ions supplied from a lithium coating layer diffuse by controlling the thickness of a cover layer. It may be possible to adjust the thickness of the cover layer based on the specifications, lifespan, etc. of a battery cell, thereby preventing oversupply and/or undersupply of the lithium ions.

According to some embodiments of the present disclosure, it may be possible to control the amount of lithium ions supplied to an electrolyte, etc. by arranging a lithium coating layer on at least one side of a second substrate of a lithium unit stack or controlling the ratio of the number of unit stacks to the number of lithium unit stacks.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode assembly, comprising:
a first electrode plate (710) including a first substrate (712) and a first composite portion (714) on the first substrate (712);
a second electrode plate (820) including a second substrate (822), a second composite portion (824) on the second substrate (822), and a lithium coating layer (826) on the second substrate (822); and
a separator (830) between the first electrode plate (810) and the second electrode plate (820).

2. The electrode assembly as claimed in claim 1, wherein the second electrode plate (820) includes a cover layer (330) on a surface of the lithium coating layer (320).

3. The electrode assembly as claimed in claim 2, wherein the cover layer (330) includes Li₂O.

4. The electrode assembly as claimed in claim 2 or 3, wherein the electrode assembly is configured so that as a thickness of the cover layer (430) increases, lithium ions (440) from the lithium coating layer (420) diffuse more slowly.

5. The electrode assembly as claimed in claim 2, 3 or 4, wherein a thickness of the cover layer (330) is 100 nm to 500 nm.

6. The electrode assembly as claimed in any one of claims 2 to 5, wherein a thickness of the cover layer (330) is 1/30 to 1/6 of a thickness of the lithium coating layer (320).

7. The electrode assembly as claimed in any preceding claim, wherein a thickness of the lithium coating layer (320) is 2 µm to 5 µm.

8. The electrode assembly as claimed in any preceding claim, wherein the lithium coating layer (826) is configured to provide lithium ions to at least one of the first composite portion (714) and the second composite portion (824).

9. A battery cell, comprising:
the electrode assembly (110) of any preceding claim;
an electrolyte; and
a case (150) accommodating the electrode assembly (110) and the electrolyte.

10. The battery cell as claimed in claim 9, wherein lithium in the lithium coating layer (826) includes lithium ions (340) provided to the electrolyte.

11. The battery cell as claimed in claim 9 or 10, wherein the electrode assembly (70) is a stacked electrode assembly including a plurality of unit stacks (700) including a portion of the first electrode plate (710), a portion of the separator (830), and a portion of the second electrode plate (820).

12. The battery cell as claimed in claim 11, wherein:
the electrode assembly (80 90) further includes at least one lithium unit stack (800 900) including a portion of the first electrode plate (810 910), a portion of the separator (830;930), and a portion of the second electrode plate (820;920), and
the lithium coating layer (826 924_1 924_2) is only on the second substrate (822 922) in the at least one lithium unit stack (800 900) among the plurality of unit stacks (700) and the at least one lithium unit stack (800 900).

13. The battery cell as claimed in claim 12, wherein only the lithium coating layer (826) is placed on at least one side of the second substrate (822) in the at least one lithium unit stack (800).

14. The battery cell as claimed in claim 12, wherein a ratio of a number of the plurality of unit stacks (700) to a number of the at least one lithium unit stack (800 900) is 35:1 to 80:1.

15. A method of manufacturing an electrode assembly, the method comprising:
preparing a first electrode plate including a first substrate and a first composite portion placed on the first substrate (S1010);
preparing a second electrode plate including a second substrate, a second composite portion placed on the second substrate, and a lithium coating layer (S1020); and
placing a separator between the first electrode plate and the second electrode plate (S1030).
